# EUROPEAN PATENT APPLICATION

(11) **EP 2 910 942 A1**
(43) Date of publication of application: **26.08.2015**
(21) Application number: 14400010.6
(22) Date of filing: 24.02.2014
(51) Int. Cl.: G01N 29/22, G01N 29/265

(54) **Testing arrangement for ultrasonic testing of a mechanical component**

(71) Applicant: AIRBUS HELICOPTERS DEUTSCHLAND GmbH, 86609 Donauwörth (DE)
(72) Inventor: Holzheimer, Manuel, D-81541 Munich (DE); Bludau, Jakob, D-80939 Munich (DE)
(74) Representative: GPI & Associés

(57) **Abstract**

The invention is related to a testing arrangement (1) for ultrasonic testing of a mechanical component by means of an associated probe element (2), comprising a probe carrier (1 a) with a carrying device (5) and a probe element support (3), said probe element support (3) being adapted to receive said associated probe element (2), wherein said probe element support (3) and said carrying device (5) are interconnected by a leaf spring (4).

## Description

The invention is related to a testing arrangement for ultrasonic testing of a mechanical component with the features of claim 1.

Ultrasonic testing is particularly suitable for quality assurance of mechanical components, as it allows a reliable in-depth inspection of such mechanical components that goes beyond a mere visual inspection thereof. However, currently available ultrasonic testing arrangements that are adapted to perform such an ultrasonic testing are comparatively expensive and generally only applicable in concrete predefined testing environments. More specifically, currently available ultrasonic testing arrangements are only adapted to satisfy predetermined testing requirements with a limited number of degrees of freedom of an associated probe element. In particular, such a limited number of degrees of freedom can only be guaranteed by comparatively complex testing arrangements.

For ultrasonic testing of complex mechanical components having angled and crooked sections, different probe elements with differing diameters, as well as differing ultrasonic testing arrangements as a whole, may be required. But providing such differing ultrasonic testing arrangements is expensive, while providing a single ultrasonic testing arrangement that is usable with different probe elements requires provision of different probe element supports within this single ultrasonic testing arrangement, thereby leading to undesired increased overall dimensions thereof. However, such increased overall dimensions limit in return usability of the testing arrangement for testing complex mechanical components having angled and crooked sections.

Alternatively, a single ultrasonic testing arrangement may be adapted for use with exchangeable probe element supports, so that probe element supports for probe elements with differing diameters can be applied. However, exchanging the probe element supports during testing of a given mechanical component extends the time required for the testing, thereby increasing the costs thereof.

Another problem with currently available ultrasonic testing arrangements may occur if a time critical ultrasonic testing needs to be performed with a particular probe element that is not ready for use with an existing testing arrangement. In this case, a suitable probe element support needs to be fabricated in order to adapt the existing testing arrangement for use with this particular probe element. However, fabrication of the suitable probe element support can be cost-intensive and time-consuming.

Furthermore, in operation of a given ultrasonic testing arrangement, an associated probe element generally needs to abut uniformly against a given mechanical component during an entire underlying testing procedure. This is achieved by pressing the associated probe element with a corresponding contact pressure against the mechanical component, e.g. by means of an associated helical spring.

The document CN 2014 64432 U describes such a testing arrangement that presses an associated probe element with a helical spring against a mechanical component that is to be tested. This testing arrangement is formed of a probe tracking device used for ultrasonic flaw detection and comprises an upper layer connecting frame, a lower layer connecting frame, an upper layer helical spring, a lower layer helical spring, a connecting rod, a supporting rod and rollers. A pin is fixed at the upper part of the upper layer connecting frame. The connecting rod is fixed on the edge of the lower part of the upper layer connecting frame and a through-hole corresponding to the connecting rod is formed on the edge of the lower layer connecting frame. The connecting rod penetrates through the upper layer helical spring, the through-hole of the lower layer connecting frame, and the lower layer helical spring in sequence, so that the upper and the lower layer connecting frames are connected and mounted together. The lower end part of the connecting rod is compressed and fixed with the lower end of the lower layer helical spring, thereby mounting a barrier element. A supporting rod is mounted at the lower part of the lower layer connecting frame. The rollers are arranged at the lower part of the supporting rod and a probe element is fixedly mounted at the middle part at the lower part of the lower layer connecting frame.

Application of this testing arrangement requires a free an unimpeded access to a given mechanical component from its upper, i.e. top side, while e.g. an ultrasonic testing from a lateral position thereof is not possible. Furthermore, this testing arrangement is not suitable for ultrasonic testing of complex mechanical components having angled and crooked sections due to its limited number of degrees of freedom. Moreover, the contact pressure exerted by the helical spring via an associated probe element on the given mechanical component is comparatively high and may, thus, lead to breakage of the mechanical component.

To avoid such a breakage, currently available ultrasonic testing arrangements may comprise some overload protection means for protecting the mechanical component against an overload caused by the contact pressure of the associated probe element. However, when testing comparatively thin mechanical components, breakage may occur prior to activation of such overload protection means, e.g. prior to activation of an associated overload switch. Accordingly, it is not possible to use currently available ultrasonic testing arrangements to perform ultrasonic testing on mechanical components having a thickness of less than 2 mm.

Another problem related to the comparatively high contact pressure exerted by the helical spring via the associated probe element on the given mechanical component consists in a possible disrupting or squeezing of a water film that needs to be maintained between the associated probe element and the given mechanical component during an underlying testing procedure in order to obtain meaningful and reliable measurements. If such a water film is disrupted or squeezed due to the comparatively high contact pressure, the measurements obtained during the underlying testing procedure can be unusable. Thus, continuous monitoring of the ultrasonic testing arrangement by respective control staff is required to guarantee that usable measurements are obtained, so that an automated ultrasonic testing is not possible.

It is, therefore, an object of the present invention to provide a testing arrangement for an automated ultrasonic testing of a mechanical component by means of an associated probe element that is applicable with a freely selectable orientation relative to the mechanical component and that can also be used for ultrasonic testing of comparatively thin mechanical components.

This object is solved by a testing arrangement for ultrasonic testing of a mechanical component with the features of claim 1.

More specifically, according to the invention a testing arrangement for ultrasonic testing of a mechanical component by means of an associated probe element is provided. The testing arrangement comprises a probe carrier with a carrying device and a probe element support. The probe element support is adapted to receive the associated probe element. The probe element support and the carrying device are interconnected by a leaf spring.

It should be noted that the term "leaf spring" refers in the context of the present invention to any flat, plate-like and/or ribbon-like spring. Such a leaf spring can be single-layered or laminated and made of plastic, metal, in particular steel, or any other suitable material, such as wood. Furthermore, combinations of these materials are also contemplated.

The inventive testing arrangement is particularly suitable for an automated ultrasonic testing of mechanical components, as the applied leaf spring can be provided with an associated bending and torsional stiffness that allows for a continuously uniform abutment of the associated probe element against a given mechanical component that is to be tested, with a limited contact pressure. Thus, maintenance of a corresponding water film between the associated probe element and the given mechanical component can be guaranteed, even if the given mechanical component exhibits a cambered outer surface.

Preferably, the applied leaf spring is designed to be weaker than the given mechanical component by selecting an appropriate bending and torsional stiffness, so that a breakage of the mechanical component due to overload conditions can reliably be avoided. More specifically, if an overload condition occurs, the leaf spring is bended more than the given mechanical component due to its greater weakness, so that the mechanical component is protected against breakage. Furthermore, such a comparatively weak design of the leaf spring reduces a resulting contact pressure of the associated probe element against the given mechanical component, so that comparatively thin mechanical components having e.g. a thickness of less than 2 mm can also be tested securely and reliably.

Advantageously, the inventive testing arrangement is realized without any articulations or lever arms due to the application of the leaf spring and, therefore, comprises reduced overall dimensions. For instance, if the inventive testing arrangement is embodied for use with an associated standard 5 MHz probe element having a diameter of 6,35 mm, an associated installation or structural height can be reduced to approximately 5 cm. Thus, testing environments with limited access to the given mechanical component can be envisaged, especially independent of a respective orientation of the associated probe element relative to the given mechanical component, so that also complex mechanical components having angled and crooked sections and/or cambered outer surfaces may easily be inspected.

According to one aspect, as the leaf spring is provided with the probe element support and mounted to the carrying device, use of different probe elements with a given carrying device merely requires provision of a plurality of appropriate leaf springs provided with corresponding probe element supports that are suitable to receive the different probe elements. Thus, a quick and simple exchange of the probe elements can be enabled such that the testing arrangement can be adapted easily to changing testing requirements without requiring a change of the carrying device. The carrying device can in such a configuration be configured for manual use or be attached to an associated testing roboter.

Advantageously, such a combination of the leaf spring and the probe element support can be fabricated in a cost-saving manner and reduces fabrication costs for the testing arrangement in general. For instance, dependent on the used leaf spring and probe element support, these fabrication costs could be reduced to approximately 10% of the fabrication costs required for fabrication of a conventional probe fixture. Moreover, leaf springs with associated probe element supports for additional, e.g. newly developed probe elements can easily be fabricated in a cost-efficient manner so that existing testing arrangements can rapidly and simply be adapted to such additional probe elements. These testing arrangements further comprise a reduced number of simple and cost-efficient constituting elements that require only a reduced maintenance effort.

In resume, the testing arrangement according to the present invention is flexible, can easily be adapted to varying testing environments independent of a required positional orientation and conforms to all relevant security standards. It is suitable for use in automated testing procedures and comparatively low-maintenance, thus reducing operation and maintenance costs. Furthermore, it has reduced overall dimensions and can, thus, advantageously be applied for testing complex mechanical components having angled and crooked sections and/or cambered outer surfaces. Moreover, it can be produced in a cost-efficient manner as it comprises a reduced number of constituting elements and can easily and rapidly be retooled. Additionally, it is adaptable to future developments and modifications of probe elements or at least their corresponding geometrical embodiments and dimensions. Finally, it is adapted to perform safe and reliable high quality measurements, as it is configured to uniformly abut against a given mechanical component without a risk for overload or disrupting or squeezing of a respective water film required for measuring.

According to a preferred embodiment, the leaf spring comprises a probe element support attachment part that is rigidly attached to the probe element support, and a carrying device attachment part that is rigidly attached to the carrying device.

According to a further preferred embodiment, the carrying device comprises a plate-shaped section to which the leaf spring is rigidly attached.

According to a further preferred embodiment, the leaf spring is rigidly attached to the plate-shaped section by means of gluing, bonding, riveting and/or screwing.

According to a further preferred embodiment, the leaf spring is rigidly attached to the probe element support by means of gluing and/or bonding.

According to a further preferred embodiment, the probe element support comprises a cardanic bearing.

According to a further preferred embodiment, the cardanic bearing is a water resistant bearing.

According to a further preferred embodiment, the leaf spring comprises a glass fiber laminate.

According to a further preferred embodiment, the leaf spring comprises a carbon fiber reinforced section.

According to a further preferred embodiment, the carbon fiber reinforced section is adapted for attachment to the carrying device.

According to a further preferred embodiment, the leaf spring comprises Teflon.

According to a further preferred embodiment, the leaf spring is plate-shaped and comprises an opening for reception of the associated probe element.

According to a further preferred embodiment, the leaf spring is adapted to spring-load the associated probe element against the mechanical component in operation of the testing arrangement.

According to a further preferred embodiment, the leaf spring is adapted to spring-load the associated probe element against the mechanical component in operation of the testing arrangement with a restricted contact force.

According to a further preferred embodiment, the leaf spring comprises a predetermined bending and torsional stiffness.

Preferred embodiments of the invention are outlined by way of example in the following description with reference to the attached drawings. In these attached drawings, identical or identically functioning components and elements are labeled with identical reference numbers and characters and are, consequently, only described once in the following description.
- Figure 1 shows a perspective view of a testing arrangement with a probe element, a probe element support and a probe carrier according to a first embodiment of the invention,
- Figure 2 shows a perspective view of the probe element, the probe element support and the probe carrier of Figure 1,
- Figure 3 shows a top view of the probe element, the probe element support and the probe carrier of Figure 1 ,
- Figure 4 shows a side view of the probe element, the probe element support and the probe carrier of Figure 1,
- Figure 5 shows an exploded side view of the probe element, the probe element support and the probe carrier of Figure 1,
- Figure 6 shows an exploded perspective view of a probe element support and a probe carrier according to an alternative embodiment of the invention, and
- Figure 7 shows a perspective view of the testing arrangement of Figure 1 that is embodied according to a second embodiment of the invention.

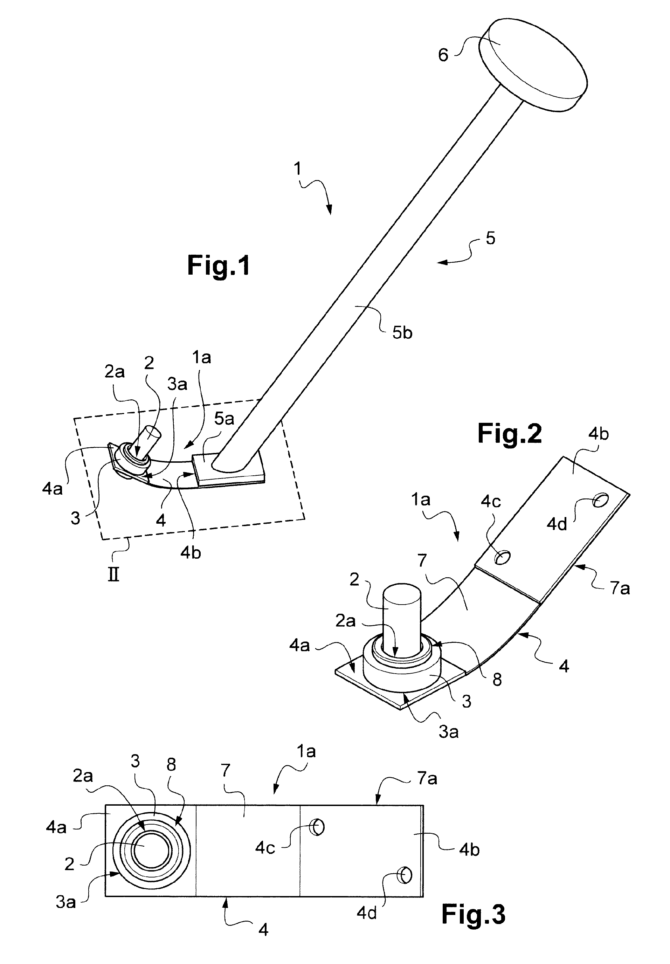

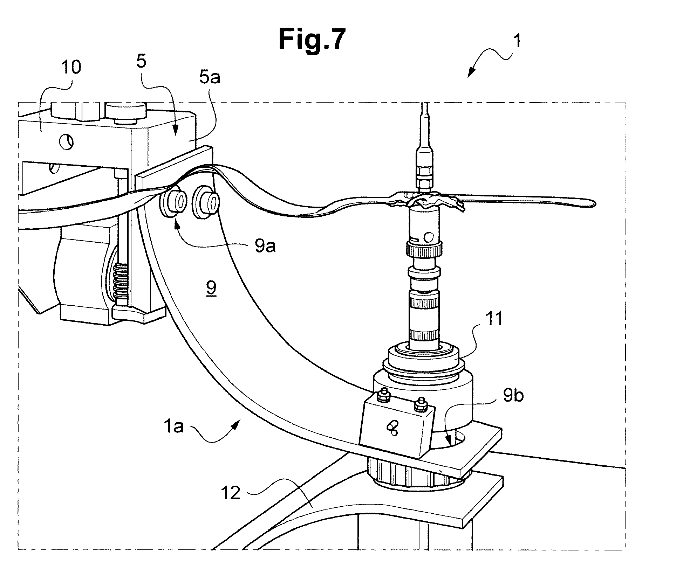

Figure 1 shows a testing arrangement 1 for ultrasonic testing of a given mechanical component (e.g. 12 in Figure 7) by means of an associated probe element 2, according to a first embodiment of the present invention. The testing arrangement 1 preferably comprises a probe carrier 1 a with a probe element support 3, a leaf spring 4 and a carrying device 5.

The carrying device 5 illustratively comprises a plate-shaped section 5a and a rod-shaped section 5b. The rod-shaped section 5b is preferably embodied as a handle that can be gripped by a user for hand-guiding of the testing arrangement 1. This rod-shaped section 5b is, by way of example, provided with fixation means 6 that are illustratively arranged at an axial end of the rod-shaped section 5b. The fixation means 6 can e.g. be used in order to attach the carrying device 5 to a testing machine or a testing roboter for an automated testing of the given mechanical component (e.g. 12 in Figure 7).

The plate-shaped section 5a is, by way of example, provided at an axial end of the rod-shaped section 5b that is opposite to the axial end bearing the fixation means 6. The plate-shaped section 5a is rigidly attached to the leaf spring 4, e.g. by means of gluing, bonding and/or riveting. Preferably, however, the rigid attachment between the plate-shaped section 5a and the leaf spring 4 is embodied as a releasable connection, e.g. as a screw connection.

The leaf spring 4 preferably comprises at least one probe element support attachment part 4a and a carrying device attachment part 4b, and is configured with a predetermined bending and torsional stiffness. The carrying device attachment part 4b is rigidly attached to the carrying device 5, i.e. its plate-shaped section 5a, as described above.

The probe element support attachment part 4a is preferably rigidly attached to the probe element support 3 by means of an associated support fixation 3a. Accordingly, the probe element support 3 is rigidly attached to the leaf spring 4 and the probe element support 3 and the carrying device 5 are, thus, interconnected by the leaf spring 4. The associated support fixation 3a providing for the rigid attachment can e.g. be an adhesive or weld joint realized by means of gluing and/or bonding.

The probe element support 3 is adapted to receive the associated probe element 2. Preferably, the associated probe element 2 is rigidly attached to the probe element support 3 by means of an associated probe element fixation 2a. Accordingly, the associated probe element 2 is rigidly attached to the probe element support 3. The associated probe element fixation 2a providing for the rigid attachment can e.g. be an adhesive or weld joint realized by means of gluing and/or bonding.

By way of example and not for limiting the invention accordingly, the associated probe element 2 is embodied as a standard 5 MHz probe with a comparatively low diameter of approximately 6,35 mm. The associated probe element 2 is preferably connected to a suitable measuring station, e.g. by one or more suitable measurement cables. However, as suitable measuring stations and suitable measurement cables are well known by the person skilled in the art and are not part of the present invention, a detailed description and illustration of these elements has been omitted for brevity and conciseness of the description, and clarity and simplicity of the drawings. This also applies to all other figures and the following description.

Figure 2 shows the probe element 2, the probe element support 3 and the leaf spring 4 of Figure 1. Figure 2 further illustrates the leaf spring 4 with the probe element support attachment part 4a and the carrying device attachment part 4b, both of which are by way of example represented as reinforced and at least slightly thicker sections of the leaf spring 4.

More specifically, the leaf spring 4 is preferably embodied as a glass fiber leaf spring 7 that comprises a glass fiber laminate. Furthermore, at least the carrying device attachment part 4b can be embodied as a carbon fiber reinforced section 7a that is adapted for attachment to the carrying device 5 of Figure 1. Therefore, the carbon fiber reinforced section 7a illustratively comprises two attachment openings 4c, 4d that are configured for receiving screws therein. Optionally, the probe element support attachment part 4a for attachment of the probe element support 3 can also be embodied as a carbon fiber reinforced section.

Preferably, the probe element support 3 comprises a cardanic bearing 8, which is preferentially embodied as a water resistant bearing. The cardanic bearing 8 is configured to allow a required, predetermined number of degrees of freedom of the probe element 2 in operation of the testing arrangement 1 of Figure 1.

Figure 3 shows the probe element 2, the probe element support 3 and the glass fiber leaf spring 7 of Figure 2 for further illustration of the two attachment openings 4c, 4d that are provided in the carbon fiber reinforced section 7a. It should, however, be noted that these two attachment openings 4c, 4d are merely shown for purposes of illustration and not for limiting the invention accordingly, as a greater number of attachment openings and also another attachment structure can be realized, which would also allow for a torque proof attachment of the glass fiber leaf spring 7 to the carrying device 5 of Figure 1.

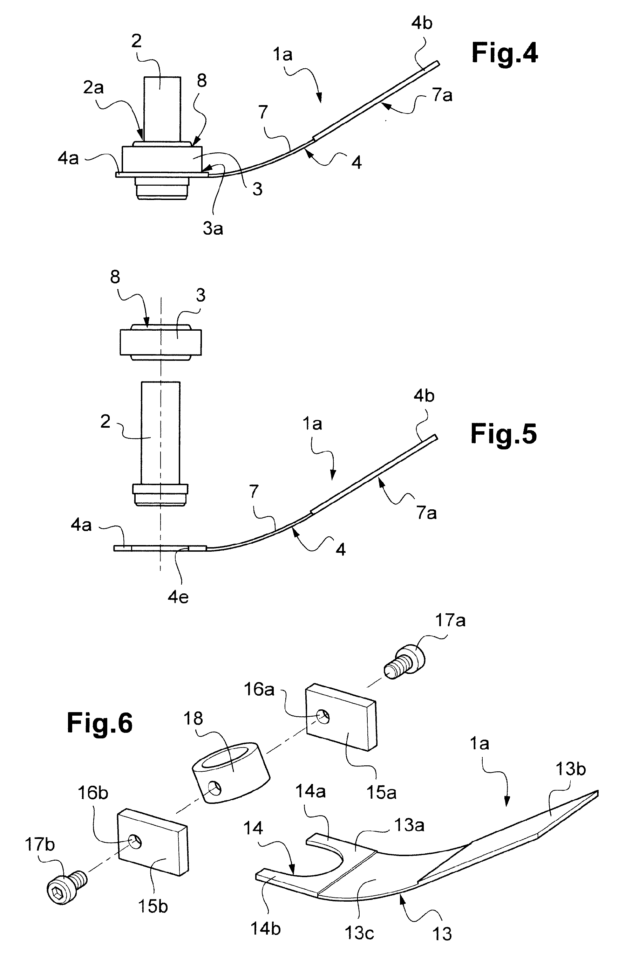

Figure 4 shows the probe element 2, the probe element support 3 and the glass fiber leaf spring 7 of Figure 2 and Figure 3 for further illustration of a predefined inclination of the carbon fiber reinforced section 7a relative to the probe element support attachment part 4a in order to generate a predefined spring load, as explained in more detail below with reference to Figure 7.

Figure 5 shows the probe element 2, the probe element support 3 and the glass fiber leaf spring 7 of Figure 2 to Figure 4 for illustration of an exemplary assembling of these elements. Illustratively, the glass fiber leaf spring 7 comprises an attachment part opening 4e provided in its probe element support attachment part 4a.

During assembly, the probe element 2 is guided through the attachment part opening 4e of the glass fiber leaf spring 7. Then, the probe element support 3 is rigidly attached to the glass fiber leaf spring 7 in the region of the attachment part opening 4e by means of the support fixation 3a of Figure 1. Subsequently, the probe element 2 is rigidly attached to the probe element support 3 by means of the probe element fixation 2a of Figure 1.

It should be noted that the above described assembly process has only be explained by way of example, but not for limiting the invention accordingly. Instead, different assembly processes are possible and within the scope of the present invention. E.g. the probe element 2 can be attached to the probe element support 3 prior to attaching the probe element support 3 to the glass fiber leaf spring 7, and so on.

Figure 6 shows the probe carrier 1a of Figure 1, which is now embodied according to an alternative embodiment. However, it should be noted that illustration of the probe element 2 and the carrying device 5 of Figure 1 has been omitted in Figure 6 for simplicity and clarity.

The probe carrier 1 a according to the alternative embodiment illustratively comprises a metal leaf spring 13 having a probe element support attachment part 13a and a carrying device attachment part 13b that are interconnected by a connecting part 13c. The parts 13a, 13b, 13c are preferentially embodied integrally, wherein the probe element support attachment part 13a and the carrying device attachment part 13b are realized as reinforced sections having e.g. a thicker cross section than the connecting part 13c.

Preferably, the probe element support attachment part 13a comprises a C- or U-shaped probe element receiving recess 14 that is laterally delimited by corresponding lateral recess leg portions 14a, 14b. These lateral recess leg portions 14a, 14b are configured for connection to respectively associated bearing ring support plates 15a, 15b.

The bearing ring support plates 15a, 15b are illustratively arranged perpendicular to the probe element support attachment part 13a. Each one of the bearing ring support plates 15a, 15b comprises an associated support plate opening 16a, 16b, which is preferably embodied as a boring.

The borings 16a, 16b are adapted for reception of associated bearing ring rotation axles 17a, 17b. These associated bearing ring rotation axles 17a, 17b are embodied for rotatably mounting a bearing ring 18 to the bearing ring support plates 15a, 15b, wherein an associated rotation axis is defined by the bearing ring rotation axles 17a, 17b, when mounted to the associated support plate opening 16a, 16b.

It should be noted that the rotatable bearing ring 18 provides a smaller number of degrees of freedom as the cardanic bearing 8 of Figure 2 to Figure 5. However, the probe carrier 1 a having the rotatable bearing ring 18 can advantageously be applied for ultrasonic testing of mechanical components having only a planar or two-dimensionally shaped surface that is to be tested.

Figure 7 shows the testing arrangement 1 of Figure 1 that is according to a second embodiment configured for use with a probe element 11 having a comparatively large diameter of approximately 34 mm. In order to be able to cope with a corresponding, comparatively large weight of the probe element 11, a plate-shaped leaf spring 9 is provided that preferably comprises Teflon.

The plate-shaped leaf spring 9 comprises a mounting device attachment part 9a and a probe element reception opening 9b. The mounting device attachment part 9a is preferably attached to an associated mounting device 10, which illustratively implements the carrying device 5 of Figure 1 and which is preferably embodied for an automated ultrasonic testing of an associated mechanical component 12. By way of example, the mounting device attachment part 9a is attached by means of a screw connection to the associated mounting device 10 in order to allow for an exchangeable configuration of the testing arrangement 1.

The probe element reception opening 9b is adapted for reception of the probe element 11, which illustratively passes at least partially therethrough. Preferably, the opening 9b is configured such that the probe element 11 is provided with similar degrees of freedom than the probe element 2 in Figure 1.

In operation of the testing arrangement 1, the leaf spring 9 spring-loads the probe element 11 against the mechanical component 12, preferably with a restricted contact force, due to its geometrical embodiment, i.e. the inclination described by way of example with respect to the glass fiber leaf spring 7 above. Thus, a safe and reliable ultrasonic inspection of the mechanical component 12 can be performed.

It should be noted that the leaf springs 4 of Figure 1 to Figure 4 and 13 of Figure 6 operate similarly. Therefore, illustration of corresponding operation modes as well as a detailed description thereof is omitted for brevity and conciseness. This also applies to a complete measurement procedure, which is well-known to the person skilled in the art and not part of the present invention.

Using the leaf spring configurations according to the present invention, comparatively thin mechanical components can be subjected to ultrasonic testing. For instance, monolithic components with a thickness of approximately 1 mm were experimentally tested using the pulse-echo method.

### Reference List

- 1: testing arrangement
- 1a: probe carrier
- 2: lower diameter probe element
- 2a: probe element fixation
- 3: probe element support
- 3a: support fixation
- 4: plastic leaf spring
- 4a: probe element support attachment part
- 4b: carrying device attachment part
- 4c, 4d: attachment openings
- 4e: attachment part opening
- 5: carrying device
- 5a: plate-shaped section
- 5b: rod-shaped section
- 6: fixation means
- 7: glass fiber leaf spring
- 7a: carbon fiber reinforced section
- 8: cardanic bearing
- 9: teflon leaf spring
- 9a: mounting device attachment part
- 9b: probe element reception opening
- 10: mounting device
- 11: large diameter probe element
- 12: mechanical component
- 13: metal leaf spring
- 13a: probe element support attachment part
- 13b: carrying device attachment part
- 13c: connecting part
- 14: probe element receiving recess
- 14a, 14b: lateral recess leg portions
- 15a, 15b: bearing ring support plates
- 16a, 16b: support plate openings
- 17a, 17b: bearing ring rotation axles
- 18: bearing ring

## Claims

1. A testing arrangement (1) for ultrasonic testing of a mechanical component (12) by means of an associated probe element (2), comprising a probe carrier (1a) with a carrying device (5) and a probe element support (3), said probe element support (3) being adapted to receive said associated probe element (2), wherein said probe element support (3) and said carrying device (5) are interconnected by a leaf spring (4).

2. The testing arrangement (1) according to claim 1,
**characterized in that** said leaf spring (4) comprises a probe element support attachment part (4a) that is rigidly attached to said probe element support (3), and a carrying device attachment part (4b) that is rigidly attached to said carrying device (5).

3. The testing arrangement (1) according to claim 2,
**characterized in that** said carrying device (5) comprises a plate-shaped section (5a) to which said leaf spring (4) is rigidly attached.

4. The testing arrangement (1) according to claim 3,
**characterized in that** said leaf spring (4) is rigidly attached to said plate-shaped section (5a) by means of gluing, bonding, riveting and/or screwing.

5. The testing arrangement (1) according to claim 2,
**characterized in that** said leaf spring (4) is rigidly attached to said probe element support (3) by means of gluing and/or bonding.

6. The testing arrangement (1) according to claim 1, **characterized in that** said probe element support (3) comprises a cardanic bearing (8).

7. The testing arrangement (1) according to claim 6,
**characterized in that** said cardanic bearing (8) is a water resistant bearing.

8. The testing arrangement (1) according to claim 1,
**characterized in that** said leaf spring (4) comprises a glass fiber laminate.

9. The testing arrangement (1) according to claim 8,
**characterized in that** said leaf spring (4) comprises a carbon fiber reinforced section (7a).

10. The testing arrangement (1) according to claim 9,
**characterized in that** said carbon fiber reinforced section (7a) is adapted for attachment to the carrying device (5).

11. The testing arrangement (1) according to claim 1,
**characterized in that** said leaf spring (4) comprises Teflon.

12. The testing arrangement (1) according to claim 11,
**characterized in that** said leaf spring (4) is plate-shaped and comprises an opening (9b) for reception of said associated probe element (11).

13. The testing arrangement (1) according to claim 1,
**characterized in that** said leaf spring (4) is adapted to spring-load said associated probe element (2) against said mechanical component (12) in operation of said testing arrangement (1).

14. The testing arrangement (1) according to claim 13,
**characterized in that** said leaf spring (4) is adapted to spring-load said associated probe element (2) against said mechanical component (12) in operation of said testing arrangement (1) with a restricted contact force.

15. The testing arrangement (1) according to claim 1,
**characterized in that** said leaf spring (4) comprises a predetermined bending and torsional stiffness.
